# EUROPÄISCHE PATENTSCHRIFT

(11) **EP 3 852 953 B1**
(45) Veröffentlichungstag und Bekanntmachung des Hinweises auf die Patenterteilung: **02.11.2022**
(21) Anmeldenummer: 19782918.7
(22) Anmeldetag: 19.09.2019
(51) Int. Cl.: B22D 11/06, H01F 41/061, H01F 41/077, H02K 15/04, B21D 11/06, B29C 43/24

(54) **WÄLZFORMVERFAHREN UND WÄLZFORMVORRICHTUNG ZUM HERSTELLEN EINER SPIRALSTRUKTUR**
ROLLER MOLDING METHOD AND APPARATUS FOR PRODUCING A SPIRAL STRUCTURE
PROCÉDÉ ET APPAREIL DE COULÉE-LAMINAGE DESTINÉ À LA FABRICATION D'UNE STRUCTURE EN SPIRALE

(30) Priorität: 19.09.2018 DE 102018215975
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: BUSSE, Matthias, 28359 Bremen (DE); WÖSTMANN, Franz-Josef, 28359 Bremen (DE)
(74) Vertreter: Pfenning, Meinig & Partner mbB
(86) Internationale Anmeldenummer: PCT/EP2019/075152
(87) Internationale Veröffentlichungsnummer: WO 2020/058392

(56) Entgegenhaltungen:
- EP-A2- 2 387 135
- EP-A2- 2 819 276
- DE-A1- 3 515 987
- DE-C2- 3 515 987
- JP-A- S58 126 112
- US-A- 1 690 887
- US-A- 4 499 040

## Beschreibung

Die vorliegende Anmeldung betrifft ein "Wälzformverfahren" zum Herstellen einer Spiralstruktur.

Bei elektrischen Maschinen kommen gewickelte Spulen zum Einsatz. Die Spulen füllen den zur Verfügung stehenden Bauraum nicht ideal aus. Daraus resultiert eine geringere Leistungs- bzw. Drehmomentdichte der elektrischen Maschinen bezogen auf das Gewicht oder den Bauraum. Durch den Einsatz gegossener, umgeformter oder gedruckter Spulen mit veränderlichem Querschnitt wird ein besserer Füllgrad erreicht und die o.g. Defizite verbessert. Die geometrische Formgebung solcher Spulen stellt allerdings aus Sicht der Fertigungstechnik eine Herausforderung dar.

Die Formgebung dieser Spulen ist aufgrund der komplexen 3-dimensionalen Geometrie schwierig und erfolgt bislang vornehmlich in Dauerformen oder verlorenen Formen mit oder ohne Kernen. Dies sind in der Regel diskontinuierliche Verfahren mit aufwändiger Werkzeugtechnik, in denen die Spulen hergestellt werden.

Die Druckschrift DE 35 15 987 A1 beschreibt die Herstellung einer mäanderförmigen Drahtspule in Zylinderkonfiguration. Dabei wird ein endloser Draht zu einer ein- oder mehrlagigen Spule mit einer gewünschten Anzahl paralleler Windungen gewickelt, und die gewickelte Spule zu einem Mäander verformt, dessen hin- und herführende Abschnitte untereinander parallel am Umfang eines Zylinders, vorzugsweise parallel zur Zylinderachse verlaufen.

JP S58 126112 A betrifft die Herstellung einer Dämpfungsplatte durch ein Verfahren, bei dem das Plattenmaterial zwischen formgebenden Walzen hindurchgeführt wird, die zueinander umgekehrt sind, wobei der Kern des Plattenmaterials aus Kunststoff ist, um ein spezielles gewelltes Design zu erhalten. Das geschmolzene oder auf eine höhere Temperatur als den Erweichungspunkt erwärmte Plattenmaterial wird in den Freiraum zwischen einem Paar von gewellten Walzen zugeführt, die gegenläufig zueinander sind, um die Harzplatte zu formen und die Platte durch die Umdrehung der Walzen zur gleichen Zeit zuzuführen. Wenn geschmolzenes Harzmaterial von der Düse nach und nach in den Zwischenraum zwischen den einander zugewandten Walzen eingefüllt wird, die sich nach innen drehen, bildet das Material eine geformte Platte mit einer wellenförmigen Form, die den Scheiteln und Mulden der Walzen entspricht.

US 4 499 04 A betrifft ein Verfahren zur Herstellung von gestanzten Kunststoffplatten, bei dem eine geschmolzene, extrudierte thermoplastische Platte in ein flüssiges Kühlmittel getaucht wird, unmittelbar bevor sie durch ein Paar von Stanzwalzen mit zahn- oder schaufelartigen Vorsprüngen läuft. Auf diese Weise wird auf der Oberseite der geschmolzenen Kunststoffplatte vor dem Prägen eine Hautschicht gebildet. Nach dem Prägen wird die Platte durch die einander gegenüberliegenden Spitzen der oben genannten zahn- oder schaufelartigen Vorsprünge gespannt und dann aus dem flüssigen Kühlmittel entfernt, nachdem das Innere der Platte ausgehärtet ist, um eine geprägte Platte mit einer im Wesentlichen einheitlichen Dicke zu bilden.

Mit dieser Erfindung findet die Formgebung der Spule zwischen zwei kontinuierlich drehenden Walzen statt, optional mit regelbarem Winkelgeschwindigkeitsprofil der Walzen.

Am Umfang der Walzen sind verzahnungsähnliche Geometrien vorhanden, in deren Flanken Kavitäten eingearbeitet sind, die durch den Abwälzvorgang der Zahnflanken den formgebenden Hohlraum darstellen. Durch die Drehbewegung der Walzen und die Wälzbewegung der Zahnflanken schließt und öffnet die Formkavität in Abhängigkeit des Drehwinkels.

Jedem Flankenpaar der Walzen ist eine veränderte Geometrie der Kavität zugeordnet, bei der sich Breite und Tiefe der Kavität jeweils ändern, so dass nach einer vollständigen Umdrehung beider Walzen wieder die erste Kavität-Geometrie zum Eingriff kommt. So wird für die entstehende Spule für jeden Windungsschenkel eine Querschnittsänderung möglich. Weiterhin sind Kantenrundungen, U-förmige, oder andere Querschnittsformen für die Windungsschenkel (auch umlaufend) möglich, um z.B. ein Kühlmedium durch die Spule leiten zu können.

Der Vorteil der Erfindung besteht in der Reduzierung des Fertigungsaufwandes und stellt somit eine kostengünstige und serientaugliche Alternative zu bisher bekannten Formgebungsverfahren für elektrische Spulen mit veränderlichem Querschnitt dar.

Ein weiterer Vorteil ist, dass die Spulengeometrie in einem kontinuierlichen Prozess hergestellt werden kann und im weiteren Verlauf lediglich von der Folgespule abgetrennt werden muss. Durchsatz und Produktivität lassen sich damit deutlich steigern.

Es sind weder Kerne erforderlich noch entsteht bei der Formgebung eine Verwindung der Spule, die sonst nach der Entformung wieder rückgängig gemacht werden müsste. Die durch Wälzformen kontinuierlich hergestellten Spulen müssen im weiteren Verlauf lediglich noch in z-Richtung gestaucht werden. Dabei sind die Umformgrade wesentlich geringer als die Verwindung der Spulen in anderen Formgebungsverfahren durch Umformen rückgängig zu machen.

Als weiterer Vorteil des Wälzformens ist die optionale Integration der Beschichtung in den Verfahrensablauf zu nennen.

Die Patentansprüche beziehen sich unter anderem auf ein Wälzformverfahren zum Herstellen einer Spiralstruktur oder einer Spule, insbesondere einer Spiralstruktur zur Verwendung in elektrischen Maschinen wobei Material zwischen eine erste sowie eine dazu gegengleich laufende zweite Walze zugeführt wird, wobei die erste Walze erste Zähne sowie die zweite Walze zweite Zähne hat und die ersten und/ oder zweiten Zähne Zahnflanken mit Kavitäten haben zur Aufnahme des zugeführtem Materials, wobei die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird, so dass das zugeführte Material zwischen den Zähnen zu einem Abschnitt der Spiralstruktur oder der Spule geformt wird sowie auf eine entsprechende Wälzformeinrichtung.

Der Begriff "Wälzformen" ist eine Begriffsneubildung und bezeichnet die Formung von Strukturen durch Abwälzen zahnradähnlicher, mit Kavitäten versehener Elemente.

Unter dem Begriff "Abschnitt der Spiralstruktur oder einer Spule" wird ein im Wälzformverfahren geformter Abschnitt verstanden. Dies ist ein "Steigungsabschnitt".

Hierunter wird zumindest ein Abschnitt der Spiralstruktur verstanden, der eine Verdrehung und/oder einen Höhenversatz in Richtung der zentralen Achse der entstehenden Spiralstruktur bzw. späteren Spirale aufweist. Dies kann beispielsweise bei einer Rechteck-Spiralstruktur nach Bild 1 bzw. Bild 2a bis 2d (siehe unten) der Höhenversatz eines Windungsschenkels sein, der durch die in Bild 4 (siehe unten) gezeigte Zahnanordnung herstellbar ist.

Weitere Einzelheiten hierzu werden in den abhängigen Ansprüchen und in der übrigen Beschreibung dieser Patentanmeldung gezeigt.

Ausführungsformen werden in den beiliegenden Bildern offenbart. Es zeigen:

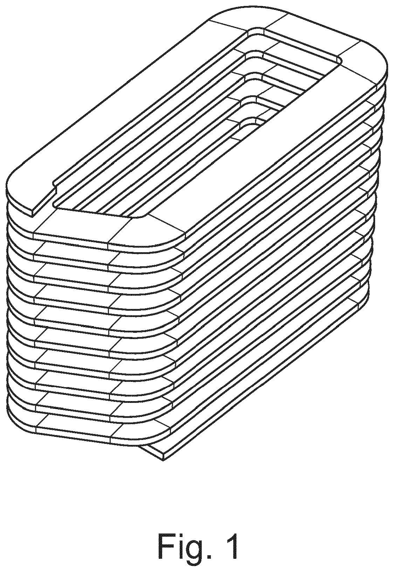

- Bild 1: eine typische Spulengeometrie;

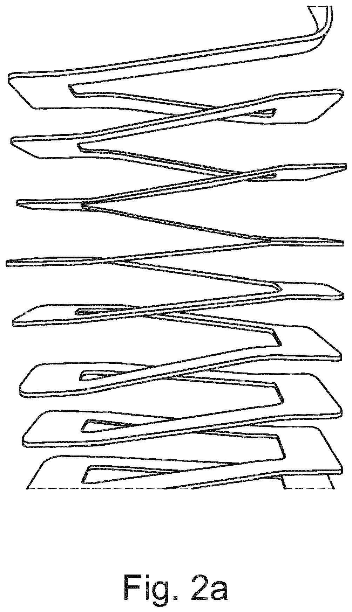

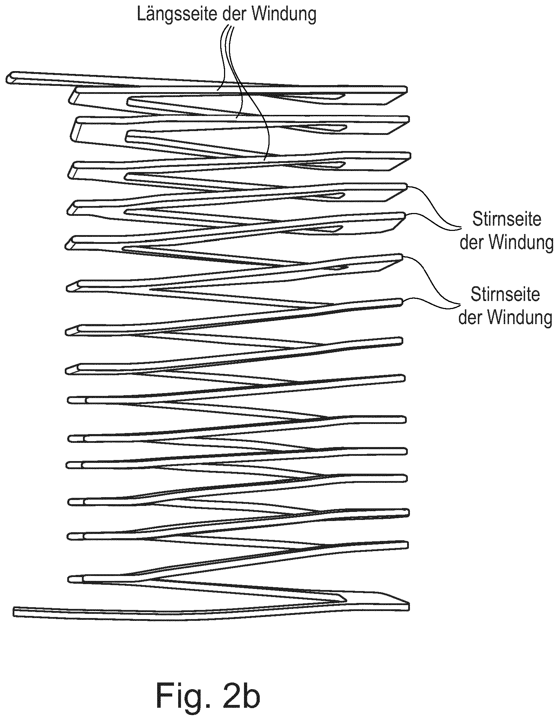

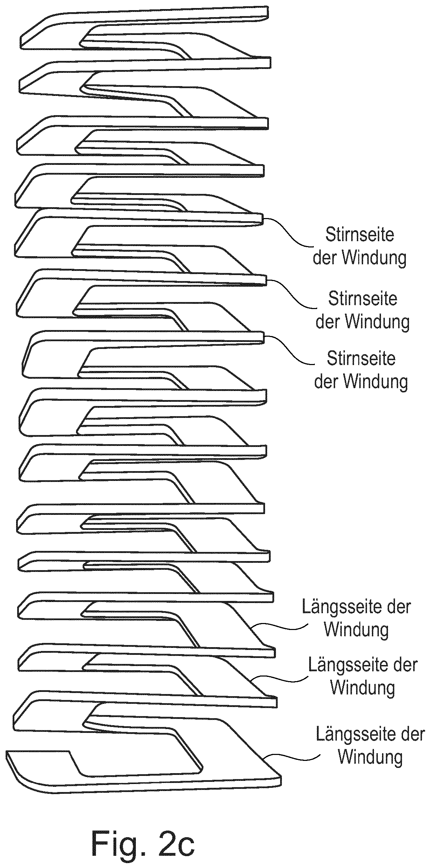

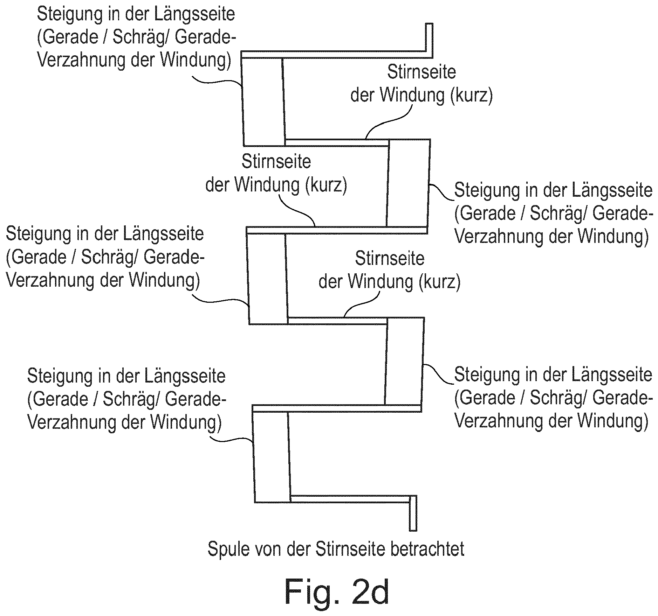

- Bild 2a bis 2d: Details einer Geometrie (einer Spiralstruktur als Ergebnis des Wälzformprozesses;

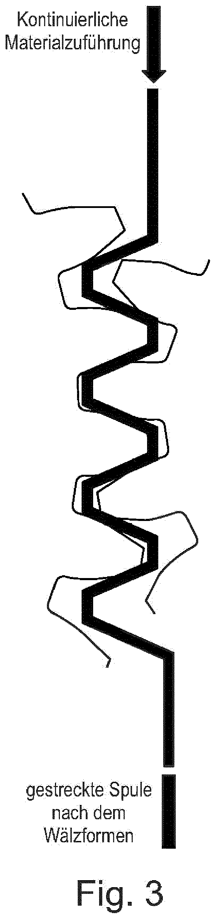

- Bild 3: das Prinzip des Wälzformprozesses;

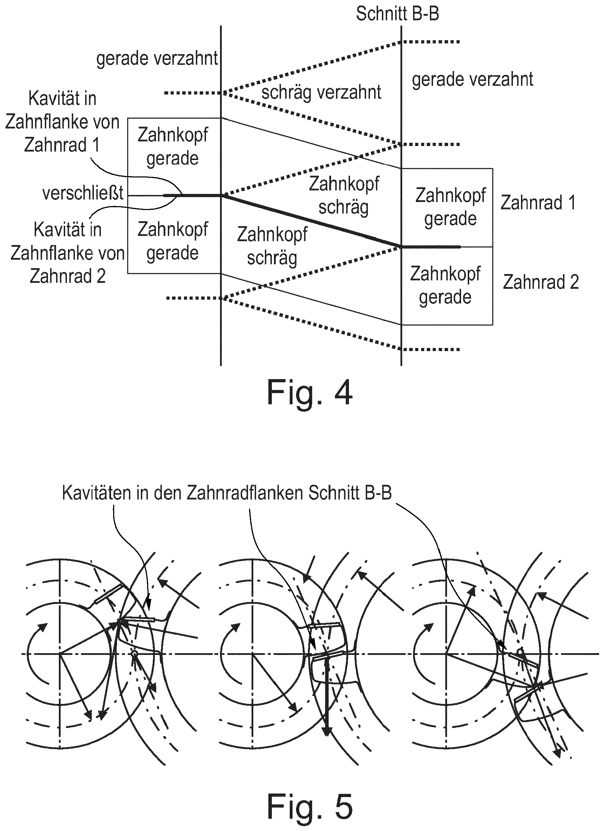

- Bild 4: die Kombination "Geradverzahnung-Schrägverzahnung-Geradverzahnung"; und
- Bild 5: sich öffnende und schließende Kavitäten im Wälzformprozess.

Eine typische Geometrie der Spule ist in Bild 1 dargestellt. Diese Spule ist in EP 2 387 135 A2 ausführlich beschrieben.

Zum Erzeugen dieser Geometrie wird gemäß der vorliegenden Patentanmeldung im Wälzformprozess zunächst eine in z-Höhenrichtung auseinandergezogene ("gestreckte") Geometrie hergestellt, die durch späteres Stauchen in z-Richtung zur in Bild 1 gezeigten Geometrie umgeformt wird. Dabei entstehen keine Verwindungen längs der einzelnen Windungsschenkel. Der entstehende Verformungsbereich für das anschließende Stauchen zur Endgeometrie liegt im Übergangsbereich vom schmalen zum langen Windungsschenkel. Der anschließende Stauchprozess muss lediglich sehr geringe Umformgrade realisieren.

Bilder 2a bis 2d zeigen eine typische Geometrie, die die im Wälzformprozess hergestellte "gestreckte" Spule darstellt.

Das Prinzip des Wälzformprozesses ist in Bild 3 dargestellt. Insbesondere gelten beim Wälzformprozess folgende Merkmale:
a) Die beiden Walzen mit zahnradähnlichen Geometrien drehen gegengleich. Dabei schließen und öffnen sie durch die Wälzbewegung der Zahnflanken die jeweilige Kavität für die Spulenwindung. Die Kavitäten sind in die jeweiligen Zahnflanken eingearbeitet und können von Zahn zu Zahn unterschiedlich sein, um veränderliche, ggfs. durchströmbare Querschnitte der entstehenden Windungen zu ermöglichen.
b) Eine in Bild 2a bis 2d gezeigte Geometrie gemäß der Erfindung entsteht durch eine Verzahnungs-Kombination auf jeder Walze jeweils aus:
   "Geradverzahnung-Schrägverzahnung-Geradverzahnung", ähnlich einer Pfeilverzahnung, bei der zwei Schrägverzahnungen kombiniert sind. Bild 4 erläutert eine solche Verzahnungsanordnung auf Walze 1 (Zahnrad 1) und Walze 2 (Zahnrad 2).
   Ein besonderer Vorteil des Wälzformens ist, dass die erzeugte Spulengeometrie keine Verwindungen enthält, sondern nach der Formgebung der Spule lediglich ein Stauchvorgang in z-Richtung erfolgen muss. Eine Verwindung um die Längsachse der Windungen ist beim Wälzformen nicht erforderlich.
c) Nach einer kompletten Umdrehung der beiden Walzen ist eine Spule mit veränderlichem Querschnitt der Windungen in gestreckter Geometrie hergestellt. Die Spule kann nach einer Umdrehung abgetrennt und danach weiterverarbeitet werden. Da der Prozess kontinuierlich laufen kann, kann das Trennen der Spulen auch zu einem späteren Zeitpunkt in der Fertigungskette erfolgen.
d) Aus der Kinematik des Abwälzens der Zahnflanken (z.B. in der in Bild 4 gezeigten Verzahnungskombination) ergibt sich sowohl das Schließen als auch das Öffnen der formgebenden Kavität. Nach dem Austritt aus dem Abwälzbereich entformt sich die Spulengeometrie mit veränderlichem Querschnitt der Windungen.
e) Bei der Zuführung des Materials in den Wälzformprozess kann die Zuführeinrichtung die Spulengeometrie in x-y-Richtung (z.B. als zyklische Rechteckbewegung) abfahren und damit den Zuführprozess in Koordination mit den Walzenbewegungen unterstützen. Dabei ist zum Beispiel eine Bewegung der Zuführeinrichtung sinnvoll, die lotrecht über der sich gerade öffnenden Kavität in den abwälzenden Zahnflanken liegt. Diese Bahn entspricht in der Regel der Spulengeometrie, wenn man sie von oben betrachtet (z. B. eine Rechteckbahn). Weiterhin kann die Zuführeinrichtung diese lotrechte Position durch entsprechendes (umlaufendes) Neigen unterstützen, so dass der Eintritt des zugeführten Materials in flachem Winkel erfolgen kann (ähnlich der Führung eines Pinsels beim Malen) und damit die Füllung der Kavität vereinfacht bzw. optimiert wird.
   Dies kann z.B. durch Roboter-geführte Zuführeinrichtungen oder andere gezielt koordinierbare Bewegungseinrichtungen erfolgen. Die Bewegung der Zuführeinrichtung muss mit der Drehung der Walzen koordiniert sein. Die Walzenbewegung kann dabei kontinuierlich/gleichmäßig sein oder mit optimiertem Geschwindigkeitsprofil an die Gegebenheiten der Materialzuführung bzw. des Erstarrungsprozesses angepasst werden.
f) Die Zuführung des Materials kann grundsätzlich in flüssiger, thixotroper oder fester Phase sowie in allen Zwischenphasen erfolgen. Diese Möglichkeiten werden in ergänzenden Erfindungsmeldungen bzw. Patentanmeldungen der Erfinder näher beschrieben.
g) Als Materialien für die Spule kommen grundsätzlich alle elektrisch leitfähigen Materialien in Betracht, insbesondere Aluminium, Kupfer und ihre jeweiligen Legierungen, alle metallischen Werkstoffe, aber auch hybride Materialien wie elektrisch leitfähige Kunststoff-Komposite.
h) Sofern die Zuführung des Materials nicht in flüssiger Form (siehe parallele Patentanmeldung derselben Anmelderin) erfolgt, kann eine Erwärmung des Materials die Zuführung in den Wälzformprozess vereinfachen und unterstützen. Daher kann in der Zuführeinrichtung durch Erwärmung des Materials bei Bedarf z. B. bis kurz unterhalb der Solidustemperatur oder durch gezieltes Einstellen des thixotropen Materialzustandes sowohl die Materialzuführung als auch der Prozess der Formgebung des jeweiligen Windungsabschnittes maßgeblich vereinfacht bzw. optimiert werden.
i) Die Erwärmung des zugeführten Materials kann z.B. in der Zuführeinrichtung erfolgen. Alle bekannten Erwärmungsverfahren kommen dafür in Frage. Insbesondere beim Erwärmen und Einstellen des thixopropen Materialzustandes kommt u.a. das induktive Erwärmen des Materials in Frage. Dabei wird das Material während der Zuführung kontinuierlich erwärmt, um eine kontrollierte Einbringung des Materials in die Formkavitäten zu ermöglichen.
j) Alternativ zur Erwärmung des Materials in der Zuführeinrichtung kann das Material durch Anlegen einer elektrischen Spannung erfolgen. Dabei wird die Spannung zwischen der Zuführeichrichtung und den Zahnflanken (mit den Kavitäten) angelegt. Durch entsprechende Regelung von Strom/Spannung kann das zugeführte Material so direkt auf dem Weg von der Zuführeinrichtung bis in die Formkavitäten gezielt erhitzt werden.
k) Optional können die Zahnflanken mit den Formkavitäten ebenfalls temperiert werden. Dies kann einerseits eine geregelte Erwärmung der Formkavitäten in den Zahnflanken sein. Hierdurch kann der Formgebungsprozess nach der Zuführung des Materials unterstützt werden. Andererseits kann auch eine geregelte Kühlung der Zahnflanken erfolgen, um z.B. bei der Zuführung von flüssigem Material (Gießen) oder thixotropem Material die Erstarrung in der Formkavität zu beeinflussen. Durch beschleunigte Abkühlung können einerseits verbesserte Gefügeeigenschaften erreicht werden, andererseits kann die Produktivität des Wälzformens erhöht werden, weil bei größerem Materialdurchsatz (höhere Drehzahl der Walzen) die Erstarrung bzw. Abkühlung und Stabilisierung der entstehenden Spule erreicht werden kann.
l) Durch Aufsprühen eines geeigneten Trennmittels auf die rotierenden Walzen im Bereich der formgebenden Kavitäten kann einerseits die Entformung der gestreckten Spule beim Austritt aus dem Abwälzbereich vereinfacht werden. Andererseits kann das Trennmittel z.B. eine oxidierende Wirkung auf die Oberfläche der Spulenwindungen haben, was die elektrische Isolation der Windungen untereinander verstärkt (Effekt des Eloxierens) und gleichzeitig eine unterstützende Wirkung für die spätere Beschichtung zur Isolation der Spule darstellen kann.
m) Zur elektrischen Isolation der Spule kann eine Beschichtung aufgebracht werden. Dies kann einerseits durch ein nachgeschaltetes Walzenpaar mit vergleichbarer Zahnflankengeometrie erfolgen, in die die gestreckte Spule erneut eingezogen wird. In die Kavitäten dieses zweiten Walzenpaares wird zuvor kontinuierlich das Isolationsmaterial eingebracht, dass beim Durchlauf der gestreckten Spule ähnlich einem Walzplattierverfahren auf die Windungen ggfs. bei erhöhter Temperatur aufgebracht wird.
n) Alternativ zum Beschichten in einem zweiten Walzenpaar (siehe m) kann das Isolationsmaterial auch im selben Walzenpaar erfolgen, in dem auch die eigentliche Formgebung stattfindet. Dazu wird vor dem Einbringen des elektrisch leitenden Spulenmaterials die Isolierschicht in die Formkavitäten eingebracht, wie z.B. unter m) beschrieben.
o) Alternativ zu m) kann die Beschichtung auch erfolgen, indem die Spule nach der Formgebung nicht aus den formgebenden Kavitäten entformt wird, sondern axial weiter auf einer bei beiden Walzen aufgewickelt wird. Nach einer oder mehreren Umdrehungen kommt so die Spulengeometrie axial durch das Aufwickeln auf einer der beiden Walzen mit der anderen Walze erneut in den Eingriffsbereich und kann dort dann wie unter m) beschrieben beschichtet werden. Erst dann erfolgt bei dieser Option durch Abwickeln von der Walze die Entformung der dann bereits beschichteten Spule.
p) Die Technologien zum Beschichten werden in ergänzenden Erfindungsmeldungen weiter differenziert und näher beschrieben. Diese Verfahren stellen Alternativen zu bekannten und bereits zum Patent angemeldeten Beschichtungsverfahren dar.

## Patentansprüche

1. Wälzformverfahren zum Herstellen einer Spiralstruktur oder von Spulen, insbesondere einer Spiralstruktur zur Verwendung in elektrischen Maschinen,
wobei Material zwischen eine erste sowie eine dazu gegengleich laufende zweite Walze zugeführt wird, wobei die Walzen sich kontinuierlich oder mit veränderlicher Geschwindigkeit drehen, wobei
die erste Walze erste Zähne sowie die zweite Walze zweite Zähne hat und die ersten und/ oder zweiten Zähne Zahnflanken mit Kavitäten haben zur Aufnahme des zugeführtem Materials, wobei
die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird, so dass das zugeführte Material zwischen den Zähnen zu einem Steigungsabschnitt der Spiralstruktur oder der Spule geformt wird, der einen Höhenversatz in Richtung einer zentralen Achse der so geformten Spiralstruktur oder Spule bildet.

2. Wälzformverfahren nach Anspruch 1, **dadurch gekennzeichnet, dass**
das zugeführte Material flüssig, thixotrop oder fest ist.

3. Wälzformverfahren nach einem der vorhergehenden Ansprüche,
**dadurch gekennzeichnet, dass** das Material ein Flachmaterial mit einem runden, rechteckigen oder ähnlichen Querschnitt ist und/oder eine mäanderartige Struktur aufweist, sofern das Material nicht im flüssigen Zustand zugeführt wird.

4. Wälzformverfahren nach einem der vorhergehenden Ansprüche,
**dadurch gekennzeichnet, dass** das Material metallisch ist, aus Kunststoff oder aus einer Kombination von Metallen und Kunststoffen besteht.

5. Wälzformverfahren nach dem vorhergehenden Anspruch, **dadurch gekennzeichnet, dass** das metallische Material Eisen, Aluminium, Kupfer bzw. Legierungen der vorgenannten Elemente enthält.

6. Wälzformverfahren nach einem der vorhergehenden Ansprüche,
**dadurch gekennzeichnet, dass** das zugeführte Material vor einer Zuführung zu den Walzen aufgeheizt wird, beispielsweise durch Anlegen von Strom/Spannung zwischen den Walzen und einer Zuführeinrichtung oder auf induktive Weise.

7. Wälzformeinrichtung zum Herstellen einer Spiralstruktur oder einer Spule, insbesondere einer Spiralstruktur zur Anwendung in elektrischen Maschinen, enthaltend
zumindest eine erste Walze mit ersten Zähnen sowie eine hierzu gegengleich laufende zweite Walze mit zweiten Zähnen, wobei
die ersten und/ oder zweiten Zähne Zahnflanken mit Kavitäten haben zur Aufnahme von zugeführtem Material, wobei
die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird zur Formung des zugeführten Materials zwischen den Zähnen zu einem Abschnitt der Spiralstruktur oder Spule, wobei
die Zähne abschnittsweise eine Geradverzahnung und eine Schrägverzahnung aufweisen, in Form einer Abfolge "Geradverzahnung/Schrägverzahnung/Geradverzahnung".

8. Wälzformeinrichtung nach Anspruch 7, **dadurch gekennzeichnet, dass** diese eine Zuführeinrichtung zum Ausrichten des den Walzen zugeführten Materials aufweist, insbesondere zum Neigen und Drehen von Flachmaterial bezüglich der Walzen.

## Claims

1. A roller molding method for producing a spiral structure or coils, in particular a spiral structure for use in electric machines,
wherein material is supplied between a first roller and a second roller running opposite thereto, wherein the rollers rotate continuously or at varying speed, wherein
the first roller has first teeth, and the second roller has second teeth, said first and/or second teeth having tooth flanks with cavities for receiving the supplied material, wherein
the teeth are designed and aligned such that the cavity of at least one tooth is at least temporarily delimited by the surface of a tooth of the other roller when the rollers are rotating such that the supplied material is molded between the teeth into a pitch portion of the spiral structure or the coil that forms a height offset in the direction of the central axis of the resultant spiral structure or coil.

2. The roller molding method according to claim 1, **characterized in that** the supplied material is liquid, thixotropic or solid.

3. The roller molding method according to one of the preceding claims, **characterized in that** the material is a flat material with a round, rectangular or similar cross-section and/or has a meandering structure, if the material is supplied not in the liquid state.

4. The roller molding method according to one of the preceding claims, **characterized in that** the material is metallic, consists of plastic, or consists of a combination of metals and plastics.

5. The roller molding method according to the preceding claim, **characterized in that** the metallic material contains iron, aluminum, copper or alloys of the aforementioned elements.

6. The roller molding method according to one of the preceding claims, **characterized in that** the supplied material is heated before being supplied to the rollers, for example by applying current/voltage between the rollers and a supply device or inductively.

7. A roller molding device for producing a spiral structure or a coil, in particular a spiral structure for use in electric machines, containing
at least a first roller with first teeth and a second roller, running opposite thereto, with second teeth, wherein
the first and/or second teeth have tooth flanks with cavities for receiving supplied material, wherein
the teeth are designed and aligned such that the cavity of at least one tooth is at least temporarily delimited by the surface of a tooth of the other roller when the rollers are rotating in order to mold the supplied material between the teeth into a portion of the spiral structure or the coil, wherein
the teeth have, in portions, a straight toothing and an inclined toothing in the shape of a sequence of "straight toothing/inclined toothing/straight toothing".

8. The roller molding device according claim 7, **characterized in that** this has a supply device for aligning the material supplied to the rollers, in particular for inclining and rotating flat material relative to the rollers.

## Revendications

1. Procédé de coulée-laminage destiné à la fabrication d'une structure en spirale ou de bobines, en particulier, d'une structure en spirale prévue pour une utilisation dans des machines électriques,
dans lequel le matériau est mené entre un premier cylindre et un deuxième cylindre tournant dans le sens contraire à celui-ci, les cylindres tournant de manière continue ou avec une vitesse variable, où
le premier cylindre possède des premières dents, et le deuxième cylindre possède également des deuxièmes dents, et les premières dents et/ou les deuxièmes dents possèdent des flancs de dents pourvus de cavités, permettant la réception du matériau approvisionné, où
les dents sont orientées de telle manière que, lors de la rotation des cylindres, la cavité d'au moins une dent est délimitée au moins par moments par une surface d'une dent de l'autre cylindre, de sorte que le matériau approvisionné est moulé entre les dents pour donner un segment de croissance de la structure en spirale ou de la bobine, qui forme un déport vers le haut en direction d'un axe central de la structure en spirale ou de la bobine ainsi formée.

2. Procédé de coulée-laminage selon la revendication 1, **caractérisé en ce que** le matériau approvisionné est liquide, thixotrope ou solide.

3. Procédé de coulée-laminage selon l'une des revendications précédentes, **caractérisé en ce que** le matériau est un matériau plat avec une section transversale circulaire, rectangulaire ou similaire, et/ou présente une structure en méandres, dans la mesure où le matériau n'est pas approvisionné à l'état liquide.

4. Procédé de coulée-laminage selon l'une des revendications précédentes, **caractérisé en ce que** le matériau est métallique, est constitué d'une matière plastique ou d'une combinaison de métaux et de matières plastiques.

5. Procédé de coulée-laminage selon la revendication précédente, **caractérisé en ce que** le matériau métallique contient du fer, de l'aluminium, du cuivre, respectivement des alliages des éléments cités précédemment.

6. Procédé de coulée-laminage selon l'une des revendications précédentes, **caractérisé en ce que** le matériau approvisionné est réchauffé avant l'approvisionnement dans les cylindres, par exemple, par l'application de courant/ d'une tension entre les cylindres et un dispositif d'approvisionnement, ou par induction.

7. Dispositif de coulée-laminage destiné à la fabrication d'une structure en spirale ou d'une bobine, en particulier, d'une structure en spirale destinée à une utilisation dans des machines électriques, contenant
au moins un premier cylindre pourvu de premières dents, ainsi qu'un deuxième cylindre pourvu de deuxièmes dents, tournant dans le sens contraire à celui-ci, où
les premières dents et/ou les deuxièmes dents possèdent des flancs de dents pourvus de cavités, permettant la réception du matériau approvisionné, où
les dents sont conçues et orientées de telle manière que, lors de la rotation des cylindres, la cavité d'au moins une dent est délimitée au moins par moments par une surface d'une dent de l'autre cylindre, permettant le moulage du matériau approvisionné entre les dents pour donner un segment de la structure en spirale ou de la bobine, où
les dents présentent par endroits une denture rectiligne et une denture inclinée sous forme d'une suite de « denture rectiligne/ denture inclinée/ denture rectiligne ».

8. Dispositif de coulée-laminage selon la revendication 7, **caractérisé en ce que** celui-ci présente un dispositif d'approvisionnement pour l'installation du matériau approvisionné dans les cylindres, en particulier, pour incliner et tourner le matériau plat par rapport aux cylindres.
